# FASCICULE DE BREVET EUROPEEN

(11) **EP 3 513 513 B1**
(45) Date de publication et mention de la délivrance du brevet: **20.08.2025**
(21) Numéro de dépôt: 17771793.1
(22) Date de dépôt: 11.09.2017
(51) Int. Cl.: H04B 10/116, F21S 8/02, F21V 15/01, F21V 33/00, F21Y 115/10, H05B 45/00, H05B 47/195

(54) **LUMINAIRE CONNECTABLE À UN RÉSEAU DE TÉLÉCOMMUNICATION**
LEUCHTE, DIE MIT EINEM TELEKOMMUNIKATIONSNETZWERK VERBUNDEN WERDEN KANN
LIGHT FIXTURE CONNECTABLE TO A TELECOMMUNICATION NETWORK

(30) Priorité: 13.09.2016 FR 1658544; 06.04.2017 FR 1753008
(43) Date de publication de la demande: 24.07.2019
(73) Titulaire: Lucibel SA, 76770 Le Houlme (FR)
(72) Inventeur: POULAIN, Emilie, 76120 Le Grand Quevilly (FR); BOINET, Loïc, F-76240 Le Mesnil Esnard (FR)
(74) Mandataire: Martin, Marie-Aude
(86) Numéro de dépôt international: PCT/FR2017/000166
(87) Numéro de publication internationale: WO 2018/050974

(56) Documents cités:
- WO-A1-2016/122399
- FR-A1- 3 029 373
- US-A1- 2012 268 929
- US-A1- 2014 341 588
- US-A1- 2015 214 451
- US-A1- 2016 128 140
- US-A1- 2016 273 741
- US-A1- 2016 381 750
- STEFAN SCHMID ET AL: "EnLighting: An Indoor Visible Light Communication System Based on Networked Light Bulbs", 27 June 2016 (2016-06-27), XP055313206, Retrieved from the Internet <URL:https://s3-us-west-1.amazonaws.com/disneyresearch/wp-content/uploads/20160615205959/EnLighting-An-Indoor-Visible-Light-Communication-System-based-on-Networked-Light-Bulbs-Paper.pdf> [retrieved on 20161024], DOI: 10.1109/SAHCN.2016.7732989
- GROBE LIANE ET AL: "High-speed visible light communication systems", IEEE COMMUNICATIONS MAGAZINE, IEEE SERVICE CENTER, PISCATAWAY, US, vol. 51, no. 12, 1 December 2013 (2013-12-01), pages 60 - 66, XP011534246, ISSN: 0163-6804, [retrieved on 20131216], DOI: 10.1109/MCOM.2013.6685758

## Description

La présente invention concerne un luminaire connectable à au moins un réseau de télécommunication, par exemple le réseau Internet.

Plus particulièrement mais non exclusivement, l'invention s'applique à un luminaire basé sur la technologie dite LiFi (de l'anglais « Light-Fidelity »). Cette technologie consiste à échanger des données par des clignotements lumineux générés et perçus par un système d'éclairage prévu à cet effet, ici le luminaire, et un terminal distant, par exemple une tablette électronique, un ordinateur ou encore un téléphone mobile. Ceci permet au terminal distant d'échanger des données avec un réseau de télécommunication classique, tel que le réseau Internet, connecté au luminaire lorsque le terminal distant se situe dans le champ lumineux émis par le luminaire.

Plus spécifiquement, cette technologie LiFi consiste à moduler l'intensité lumineuse de la lumière émise par le luminaire pour coder des données numériques. En opérant une telle modulation à des fréquences très élevées, les variations d'intensité lumineuse ne sont pas perceptibles par l'oeil humain.

A cet effet, le luminaire comprend notamment un émetteur LiFi et un récepteur LiFi, à savoir respectivement une source d'éclairage et un photorécepteur. Le terminal distant comprend généralement un émetteur LiFi et un récepteur LiFi de type à émission dans le spectre infrarouge et à réception dans le spectre visible ou le spectre infrarouge.

Le terminal distant et le luminaire forment un ensemble bidirectionnel de télécommunication sans fil rendant possible le transfert de données numériques de manière ascendante et descendante, c'est-à-dire du terminal de l'utilisateur vers le photorécepteur associé à la source de lumière puis de la source de lumière vers le terminal distant.

Ceci permet à un utilisateur situé dans la zone d'éclairage de l'émetteur LiFi du luminaire de naviguer sur Internet par exemple en envoyant des requêtes à un serveur via cet ensemble bidirectionnel de télécommunication sans fil.

L'inconvénient des ensembles LiFi bidirectionnels connus est qu'ils ne sont pas compacts : en particulier, la source infrarouge est située sur un module distinct de l'émetteur LiFi. La mise en place de tels éléments s'avère dès lors très fastidieuse et les coûts de fabrication sont aussi plus élevés.

Par ailleurs, ces éléments spécifiques à la technologie LiFi sont particulièrement fragiles et doivent être préservées des chocs et impacts pouvant survenir lors du montage ou démontage du luminaire.

On connait un luminaire tel que décrit dans le document US20160381750 qui reflète le préambule de la revendication 1.

L'invention a pour but de répondre au moins en grande partie aux problèmes précédents et de conduire en outre à d'autres avantages.

A cet effet, l'invention a pour objet un luminaire connectable à au moins un réseau de télécommunication, tel que le réseau Internet pour la communication de données par la lumière avec un terminal distant, du type comprenant :
- un boîtier délimitant une paroi périphérique autour d'un axe de référence et étant muni d'un socle délimitant une fenêtre d'émission de lumière,
- un photorécepteur agencé dans le boîtier et configuré pour recevoir un faisceau lumineux du terminal distant transportant un signal de données dit montant,
- un module d'éclairage agencé dans le boîtier et configuré pour émettre un faisceau lumineux au travers de la fenêtre, transportant un signal de données dit descendant,
- un module de traitement des signaux de données selon au moins un protocole de communication du réseau,
caractérisé en ce que le luminaire comprend une carte de circuit imprimé, dite carte de traitement, s'étendant transversalement à l'intérieur du boîtier et à distance du socle, sur laquelle est monté le module de traitement, et en ce que le luminaire forme un relais de transmission de données entre le terminal distant et le réseau de communication.

Grâce à l'invention, la carte de traitement, le module d'éclairage et le photorécepteur sont logés à l'intérieur du boîtier et sont donc protégés des chocs et impacts.

Par ailleurs, le luminaire forme un ensemble harmonieux grâce à l'intégration de la technologie LiFi dans le boîtier sans déroger à l'esthétisme. En outre, la carte de traitement en s'étendant transversalement dans le boîtier est moins sensible à toute détérioration car elle peut être solidement fixée au boîtier sur toute sa périphérie.

Avec la technologie LiFi le luminaire est propre à opérer une communication des données avec un terminal disant selon un débit théorique supérieur à dix mégabits par seconde de préférence supérieure à quarante mégabits par seconde.

Un dispositif selon l'invention peut encore comporter l'une ou plusieurs des caractéristiques décrites ci-après.

De préférence, la carte de traitement occupe sensiblement toute la surface d'une section transversale du luminaire.

Dans un mode de réalisation préféré de l'invention, la carte de traitement comprend une ouverture de transmission de la lumière émise par le module d'éclairage au travers du luminaire.

Dans un mode de réalisation préféré, la carte de traitement a une forme générale de couronne fermée ou ouverte afin de laisser un passage de transmission du flux lumineux au travers du luminaire. Cette configuration spécifique permet d'optimiser la surface exploitable de la carte sans dégrader les aspects photométriques de l'éclairage du luminaire.

Dans un mode de réalisation préféré, le photorécepteur est relié électroniquement à la carte de traitement par un élément d'interconnexion électroniquement d'extension sensiblement axiale à l'intérieur du boîtier.

La présence d'un élément d'interconnexion électroniquement qui s'étend sensiblement à l'intérieur du corps du boîtier du luminaire permet une configuration étagée de la carte de traitement par rapport au socle du luminaire.

Par exemple, le photorécepteur est porté par une carte de circuit imprimé, dite carte de photoréception, et l'élément d'interconnexion électronique est formé par une plaquette flexible de circuit imprimé semiflex reliant les cartes de photoréception et de traitement.

De préférence, prise axialement, la distance entre le socle et la carte de traitement est supérieure à dix millimètres.

Dans un mode de réalisation préféré, la carte de traitement s'étend entre le module d'éclairage et le socle et dans lequel le contour de la carte de traitement délimite une ouverture de passage de la lumière émise par le module d'éclairage vers la fenêtre.

Dans un mode de réalisation préféré de l'invention, la paroi interne du boîtier est munie de plots en saillie axiale pour recevoir des vis de fixation de la carte de traitement au boîtier.

Dans un mode de réalisation préféré de l'invention, le module d'éclairage comprenant une source d'éclairage et un élément optique de mise en forme du faisceau lumineux émis par la source d'éclairage et couplé à la source d'éclairage, la carte de traitement s'étend autour de l'élément optique de base.

De préférence, l'élément optique présente une extrémité proximale couplée à la source d'éclairage et une extrémité distale débouchant sur la fenêtre d'émission de lumière.

Par exemple, l'élément optique est choisi parmi un réflecteur comprenant une surface interne réfléchissante et une lentille.

Dans un mode de réalisation préféré, le boîtier comprend un capot monté sur le socle pour loger la carte de traitement et le module d'éclairage, tel qu'un capot en forme générale de cloche tronquée.

Par exemple, le socle est réalisé dans un matériau comprenant essentiellement une matière plastique ou une matière métallique.

Dans un mode de réalisation préféré de l'invention, la carte de traitement comprend au moins un élément connecteur au réseau de télécommunication et le boîtier comprend une ouverture d'accès au connecteur au travers de sa paroi périphérique.

De préférence, le luminaire comprend une plaquette d'habillage qui est configurée pour masquer l'ouverture d'accès tout en délimitant un enjoliveur épousant le contour périphérique du connecteur.

Dans un mode de réalisation préféré de l'invention, le luminaire est destiné à être encastré dans une ouverture d'encastrement d'une structure présentant une face visible et une face cachée opposée, le socle porte des moyens de retenue du luminaire à la structure configurés pour permettre le maintien par pression du luminaire au travers de la structure.

De préférence, le luminaire comprend un organe de dissipation thermique de la chaleur générée au cours du fonctionnement du module d'éclairage, porté par le boîtier.

De préférence, le module de traitement comprend au moins une unité de réception ou au moins une unité d'émission de signaux de données selon la technologie LiFi.

L'invention a encore pour objet une carte de traitement du luminaire selon l'invention, sur laquelle est monté le module de traitement. La carte a une forme générale de couronne ouverte ou fermée afin de délimiter une ouverture de transmission de lumière lorsque la carte est montée dans le luminaire.

D'autres caractéristiques et avantages de l'invention apparaîtront à la lumière de la description qui suit, faite en référence aux dessins annexés dans lesquels :
- la figure 1 représente un schéma fonctionnel d'une architecture LiFi comprenant un luminaire connectable selon l'invention ;
- la figure 2 représente une vue en perspective du luminaire selon l'invention selon un premier point de vue ;
- la figure 3 représente une vue en perspective du luminaire de la figure 2 selon un deuxième point de vue ;
- la figure 4 représente une vue en perspective du luminaire de la figure 1 selon un troisième point de vue ;
- la figure 5 représente une vue éclatée du luminaire des figures 2 à 4 ;
- la figure 6 représente une vue de dessus en perspective d'un capot de protection représenté sur la figure 5 ;
- la figure 7 représente une vue de dessous en perspective du capot de protection du luminaire de la figure 6 ;
- la figure 8 représente une vue du capot de la figure 6 et d'une plaquette d'habillage ;
- la figure 9 représente une vue de dessus d'une carte de circuit imprimé pour le module d'éclairage du luminaire selon l'invention ;
- la figure 10 représente une vue en perspective d'une carte de circuit imprimé pour le module de traitement de signaux du luminaire selon l'invention ;
- la figure 11 représente un schéma fonctionnel des différents éléments du luminaire.

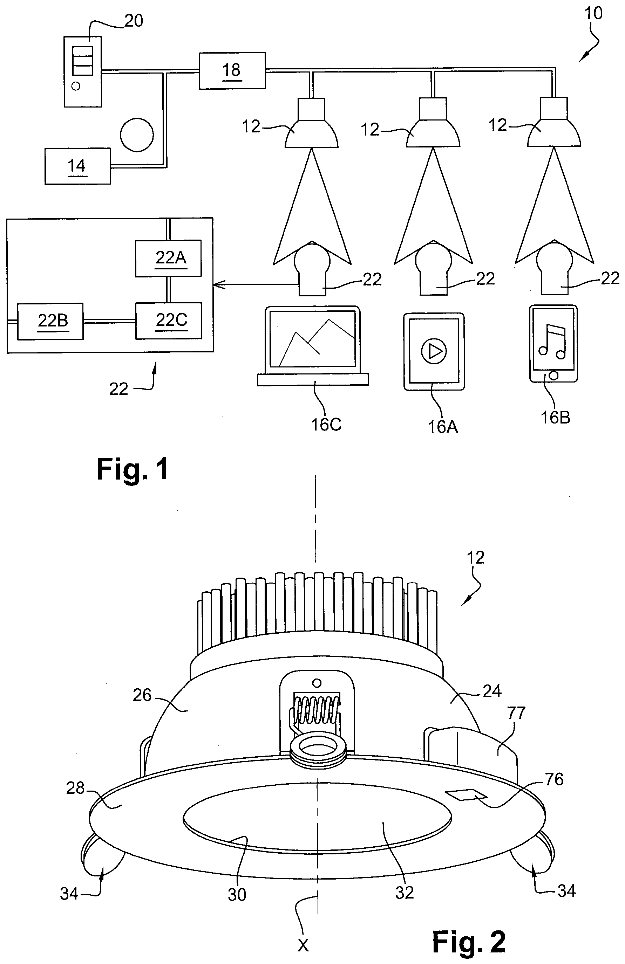

On a représenté de façon schématique sur **la** **figure** 1 un ensemble de communication comprenant un luminaire selon l'invention. Cet ensemble de communication est désigné par la référence générale 10 et le luminaire est désigné par la référence générale 12. Sur **la** **figure** 1, on a représenté trois luminaires 12. Dans la suite de la description, on ne décrira qu'un seul des trois luminaires 12.

Conformément à l'invention, le luminaire 12 est connectable à un réseau de télécommunication 14 pour la transmission de données par la lumière avec un terminal distant 16. Le réseau de télécommunication 14 peut comprendre un réseau Internet, un réseau Intranet, un réseau Ethernet ou tout autre type de réseau de communication.

Le terminal distant 16 est dans l'exemple décrit une tablette électronique 16A. En variante, le terminal distant 16 peut être un téléphone portable 16B, un ordinateur de travail 16C, etc.

Dans cet exemple, le réseau de télécommunication 14 est le réseau Internet et le protocole de communication réseau est le protocole de communication TCP/IP.

Le luminaire 12 selon l'invention forme ainsi un relais de transmission de données 21 entre le terminal distant 16 et le réseau de communication 14.

De façon connue en soi, le réseau Internet 14 est un réseau informatique mondial représentant l'interconnexion entre une pluralité de serveurs distants. Le réseau Internet 14 peut comprendre une pluralité de services associés tels qu'un service web, un service de messagerie, un service de partage de fichiers poste à poste, un service de visioconférence. Généralement, ces différents services communiquent par exemple avec le protocole TCP/IP.

Dans l'exemple décrit, le luminaire 12 est propre à opérer la communication de données avec un terminal distant selon un débit théorique supérieur à dix mégabits par seconde, de préférence supérieur à quarante mégabits par seconde, que ce soit par exemple en symétrique ou en asymétrique.

Bien entendu, en variante, le luminaire 12 peut être connecté à un réseau Intranet local représenté par un serveur local 20 sur **la** **figure 1****.**

Comme cela est illustré sur l'exemple de **la** **figure 1****,** chaque terminal distant 16 est équipé d'une clé LiFi 22 (désignée en anglais par la terminologie « dongle »). La clé LiFi 22 comprend dans l'exemple illustré un photorécepteur 22A pour la réception d'un signal de données en provenance des luminaires 12, une unité 22B d'émission d'un signal de données généré à partir du terminal 14 et une unité 22C de traitement des signaux de données émis ou reçus.

On a représenté en détail sur **les** figures 2 à **4****,** un luminaire 12 selon l'invention. Ce luminaire 12 comprend un boîtier 24 délimitant une paroi périphérique 26 autour d'un axe de référence X. Le luminaire 12 est par ailleurs muni d'un socle 28 délimitant une fenêtre 30 d'émission de lumière. La fenêtre d'émission de lumière 30 comprend par exemple une vitre transparente 32 de forme générale circulaire. En variante, la fenêtre 30 peut comporter un diffuseur.

Par ailleurs, de préférence, le luminaire 12 est destiné à être encastré dans une ouverture d'encastrement d'une structure (non représentée sur les figures) présentant une face visible et une face cachée opposée, par exemple un panneau d'habillage d'un faux plafond.

A cet effet, dans ce mode de réalisation, le luminaire 12 comprend également des moyens 34 de retenue du luminaire 12 à la structure adaptés pour permettre le maintien par pression du luminaire 12 au travers de la structure.

Généralement, un panneau d'habillage, par exemple un panneau de faux-plafond, est espacé d'une hauteur donnée d'un plafond d'un local, permettant le logement du luminaire à l'intérieur de cet espace. Le faux-plafond présente alors une ouverture d'encastrement de forme donnée, destinée à permettre la réception du luminaire et son raccordement à un réseau de câbles électriques. Le panneau de faux-plafond a une épaisseur classiquement comprise entre dix millimètres et quarante millimètres.

Les moyens de retenue 34 sont dans l'exemple décrit susceptibles d'être déplacés d'une position armée rabattue contre le luminaire 12 à une position déployée par retour élastique contre la face cachée de la structure d'habillage.

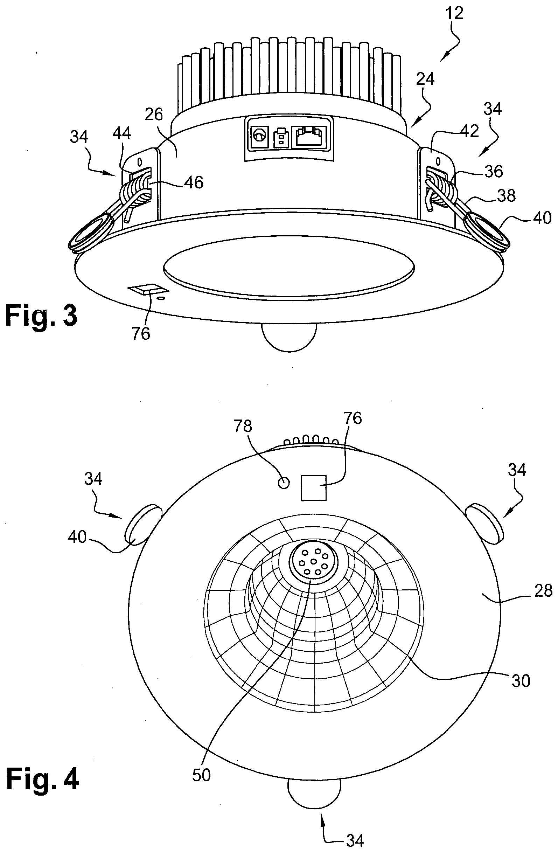

De préférence, ces moyens de retenue 34 sont à ressort. Ils comprennent chacun un ressort 36 relié à une double tige 38, cette double tige 38 pouvant être munie à son extrémité d'un embout 40 d'amortissement comme cela est illustré en détail sur **la** **figure 3****.**

Ces moyens 34 sont configurés pour exercer une pression sur la face cachée de la paroi ou de la structure d'encastrement du luminaire 12 et pour plaquer le socle 28 du luminaire 12 contre la face visible. La paroi est ainsi prise en étau entre d'une part les moyens de retenue 34 à ressort qui exerce une pression sur la face cachée de la paroi et le socle 28 qui vient se plaquer contre la face visible.

Dans ce mode de réalisation, les moyens de retenue 34 sont fixés sur le socle 28 du luminaire 12. Les moyens de retenue 34 comprennent un support 42 en forme de languette pliée ou en forme générale de L. A cet effet, le support 42 présente un orifice 44 de logement du ressort 36 présentant deux tenons 46 s'étendant transversalement en saillie à l'intérieur de l'orifice. Ces deux tenons 46 définissent un axe de rotation autour duquel est articulé le ressort 36 des moyens de retenue 34. L'orifice 44 a ainsi dans cet exemple une forme générale de double T. Le ressort 36 est maintenu par les deux tenons 46 qui sont destinés à être engagés à l'intérieur du ressort 36 par ses deux extrémités libres.

Comme cela est visible sur **la** **figure 4****,** le luminaire 12 comprend en outre un module d'éclairage 50 agencé dans le boîtier 24 et configuré pour émettre un faisceau lumineux au travers de la fenêtre 30. Ce module d'éclairage 50 comprend une source d'éclairage 52. Le module d'éclairage 50 comprend de préférence une pluralité de diodes électroluminescentes 52.

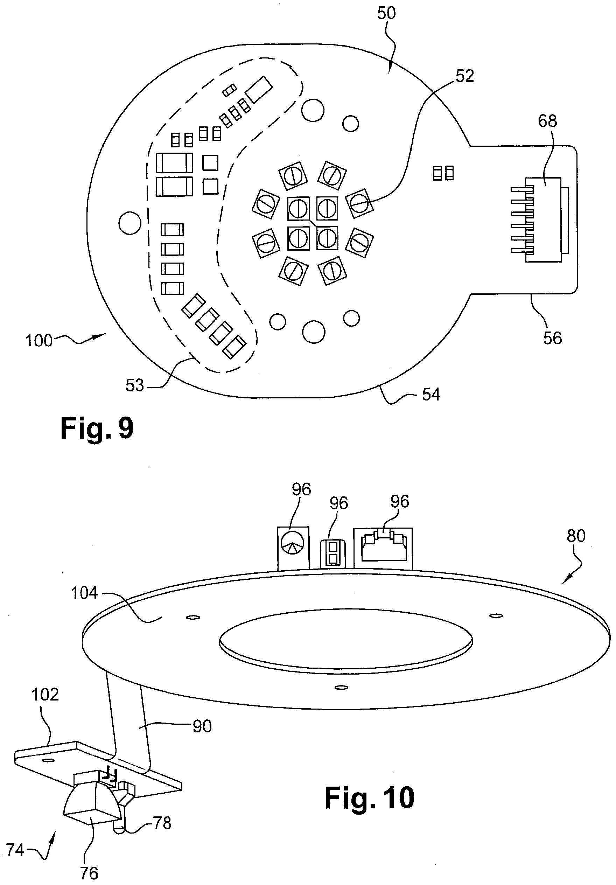

De préférence, le module d'éclairage 50 comprend une carte de circuit imprimé 100, illustrée sur **la** **figure 9****,** portant la pluralité de diodes électroluminescentes 52. La carte de circuit imprimé 100 est désignée dans la suite de la description par carte d'émission 100.

Comme cela est illustré sur **la** **figure 9****,** le module d'éclairage 50 comprend douze diodes électroluminescentes 52. La carte d'émission 100 est réalisée dans un matériau permettant une dissipation thermique efficace de la chaleur générée par les diodes 52.

Dans l'exemple illustré sur **la** **figure** 9, la carte d'émission 100 comprend une portion principale 54 et une portion secondaire 56. La portion principale 54 a une forme générale de disque et la portion secondaire 56 forme une excroissance radiale de la portion principale 54 de forme générale rectangulaire. Toutefois, la forme générale de la carte d'émission 100 n'est en rien limitative.

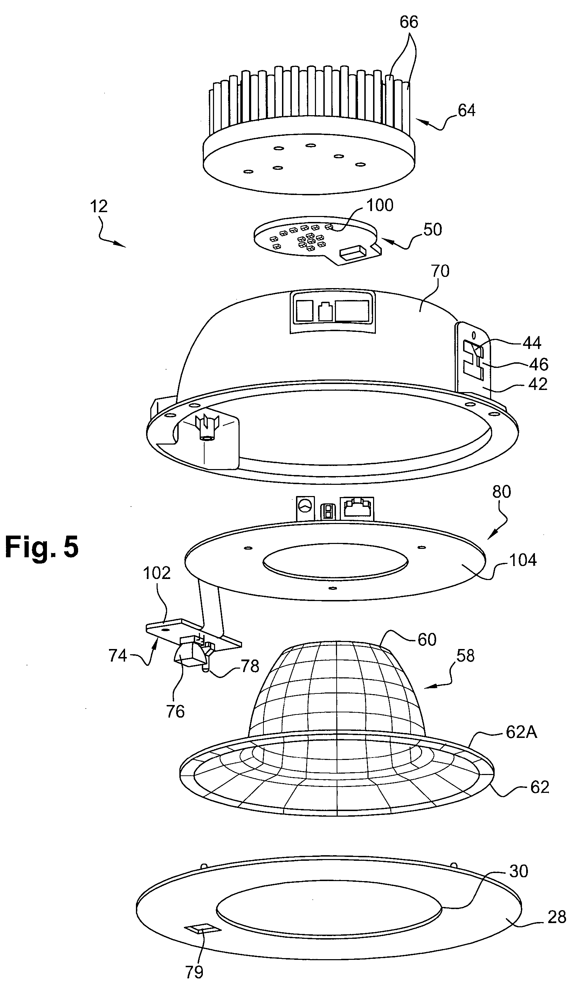

Dans ce mode de réalisation et comme cela est visible sur **la** **figure 5****,** le module d'éclairage 50 comprend encore un élément optique 58 de mise en forme du faisceau lumineux émis par la source d'éclairage 52 et couplé à la source d'éclairage 52. Ainsi, par exemple, l'élément optique 58 présente une extrémité proximale 60 couplée à la source d'éclairage 52 et une extrémité distale 62 débouchant sur la fenêtre d'émission de lumière 30. Dans ce mode de réalisation, l'élément optique de base 58 est un réflecteur comprenant une surface interne réfléchissante. Le réflecteur 58 a une forme générale tronconique pourvue à son extrémité distale 62 d'un 'rebord 62A d'extension radiale venant prendre appui sur la surface interne du socle 28 lorsque le luminaire 12 est assemblé **(****figure 5****).**

Dans une variante non illustrée, l'élément optique 58 peut comprendre une lentille.

Le luminaire 12 comprend également de préférence un dissipateur thermique 64 permettant d'évacuer la chaleur générée au cours du fonctionnement de la source lumineuse 52. Ce dissipateur thermique 64 est réalisé par exemple par un ensemble de broches 66 en matériau présentant des propriétés de conductivité thermique (par exemple les broches sont réalisées en aluminium).

Le module d'éclairage 50 comprend également une borne 68 de connexion pour le raccordement électrique du module d'éclairage 50 à un autre module du luminaire 12. Cette borne 68 est portée dans l'exemple illustré par la portion secondaire 58 d'excroissance radiale de la carte d'émission 54A.

Selon l'invention, le module d'éclairage 50 est logé dans le boîtier 24 pour émettre de la lumière au travers de la fenêtre 30.

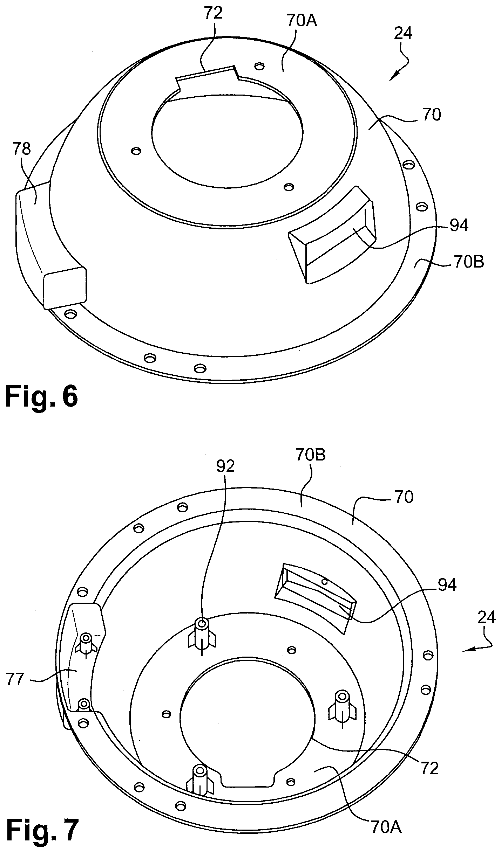

Comme cela est illustré sur **les** **figures 6 à 8**, le boîtier 24 comprend une coque 70 en matière plastique moulée. La coque 70 a par exemple une forme générale de cloche tronquée définissant une extrémité proximale 70A portant le dissipateur thermique 64 et le module d'éclairage 50 et une extrémité distale 70B délimitant une ouverture de passage du flux lumineux. A son extrémité proximale 70A, comme cela est illustré sur **les** **figures 6 et 7****,** la cloche 70 présente une ouverture 72 ayant une forme générale complémentaire de la forme de la carte d'émission 100. Ainsi, la coque 70 forme un capot monté sur le socle 28 qui porte le module d'éclairage 50. Le socle 28 est réalisé dans un matériau comprenant essentiellement une matière plastique ou une matière métallique.

En outre, la surface tronquée de la cloche 70 est configurée pour recevoir le dissipateur thermique 64 étant en contact avec le module 50 afin d'assurer une dissipation thermique efficace du module 50.

Dans ce mode de réalisation, le luminaire 12 comprend un module de photoréception 74. Ce module de photoréception 74 comprend un photorécepteur 76 agencé dans le boîtier 24. A cet effet, la coque 70 présente une protubérance 77, formée par exemple par moulage, délimitant une cavité creuse pour loger le module de photo-réception 74 visible sur **les** **figures 6 et** 7.

Plus précisément, le photorécepteur 76 est monté sur le socle 28, par exemple en périphérie de la fenêtre d'émission de lumière 30. Par ailleurs, le socle 28 comprend une ouverture 79 **(****figure 5****)** pour permettre l'insertion du photorécepteur 76. Dans l'exemple décrit, le photorécepteur 76 est monté à l'aplomb de l'ouverture 76 afin d'être visible depuis une face d'émission de lumière du luminaire au travers de l'ouverture 76.

Ce module de photoréception 74 comprend également une carte de circuit imprimé 102, représentée en détail sur **la** **figure 10****,** et portant le photorécepteur 76. Par ailleurs, de façon optionnelle, la carte de photoréception 102 comprend un indicateur 78 de fonctionnement lumineux comprenant par exemple une diode électroluminescente. La carte de circuit imprimé 102 est désignée par carte de photoréception 102.

Ce photorécepteur 76 est configuré pour recevoir un faisceau lumineux du terminal distant 16 transportant un signal de données dit montant et le module d'éclairage 50 est configuré pour émettre un faisceau lumineux transportant un signal de données dit descendant. A cet effet, le module d'éclairage 50 comprend encore une unité 53 de pilotage de la source d'éclairage 52.

De façon connue en soi, pour transporter les signaux de données, les faisceaux lumineux émis ou reçus sont modulés en intensité à très haute fréquence.

Enfin, le luminaire 12 comprend encore un module 80 de traitement des signaux de données, dans cet exemple, des signaux de données dit montant ou descendant, selon au moins un protocole de communication du réseau 12. Ce module de traitement 80 comprend au moins une unité de réception 82 ou au moins une unité d'émission 84 de signaux de données selon la technologie LiFi (ou Light Fidelity).

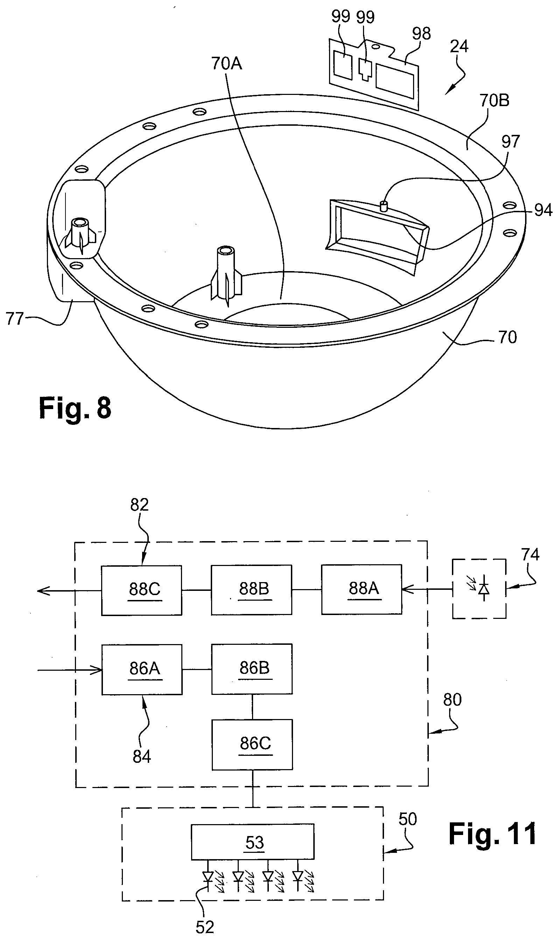

On a représenté sur **la** **figure 11****,** de façon schématique, un exemple d'organisation fonctionnelle des différents modules d'éclairage, de traitement et de photoréception.

On voit sur **cette** **figure 11** que le module de traitement 80 est raccordé à la fois au réseau 14, au module d'éclairage 52 et au module de photoréception 74. Dans cet exemple, le module de traitement 80 comprend ainsi différentes unités formant des chaînes de transmission de données.

Ainsi, le module de traitement 80 comprend par exemple une première chaîne de traitement de données du flux descendant qui forme une unité d'émission LiFi 84. La première chaîne 84 comprend une unité de réception 86A d'un signal de données selon le protocole de communication du réseau en provenance du réseau 14 et une unité 86B de traitement du signal de données selon un protocole LiFi puis une unité 86C de transmission vers le module d'éclairage 50 pour transmettre un signal de données par le flux lumineux.

Le module de traitement 80 comprend en outre une deuxième chaîne de traitement de données du flux montant 82 qui forme une unité de réception LiFi. La deuxième chaîne 82 comprend une unité 88A de réception du signal de données en provenance du module de photo-réception, une unité 88B de traitement du signal pour le mettre en forme selon un protocole de communication réseau puis une unité de transmission 88C vers le réseau de communication Internet 14.

Le module de traitement 80 comprend également une carte de circuit imprimé 104, dite carte de traitement 104.

Grâce à l'invention, l'ensemble des modules de traitement 80, d'éclairage 50 et de photo-réception 76 sont logés dans une enceinte délimitée par le boîtier 24 du luminaire 12.

Selon l'invention, la carte de traitement 104 s'étend transversalement à l'intérieur du boîtier 24 et à distance du socle 28. Par ailleurs, le photorécepteur 76 est relié électriquement à la carte de traitement 104 par un élément 90 d'interconnexion électronique d'extension sensiblement axiale. En outre, le module d'éclairage 50 est relié électriquement à la carte de traitement 104 au moyen d'un câble nappe. A cet effet, le module d'éclairage 50 comprend la borne 68 de connexion. Une borne sensiblement identique est présente par exemple sur la carte de traitement 104.

Dans l'exemple décrit, la carte de traitement 104 portant le module de traitement 80 s'étend entre le module d'éclairage 50 et le socle 28. Toutefois, dans une variante non illustrée, le module d'éclairage 50, et plus précisément la carte de traitement 104 portant le module d'éclairage 50 peut s'étendre dans le même plan transversal que la carte de traitement 104 portant le module de traitement 80.

De préférence, la carte de traitement 104 occupe sensiblement toute la surface d'une section transversale du luminaire 12.dans l'exemple décrit, la section transversale du luminaire 12 a une forme générale de disque. Dans ce cas, la carte de traitement 104 a une forme générale de disque. Dans l'exemple décrit, la carte 104 présente une ouverture centrale pour le passage de la lumière et a donc une forme générale de couronne fermée. Bien entendu, selon la forme générale du luminaire, la section transversale du luminaire peut être de différentes formes (carrée, rectangulaire, ovale, etc.).

Dans l'exemple illustré, la carte de traitement 104 s'étend entre le module d'éclairage 50 et le socle 28. Afin de laisser passer la lumière émise par le module d'éclairage 50 vers la fenêtre 30, le contour de la carte de traitement 104 délimite une ouverture de passage de la lumière. De préférence, à cet effet, la carte de traitement 104 a une forme générale de couronne ouverte ou fermée.

Prise axialement, la distance entre le socle 28 et la carte de traitement 104 est supérieure à dix millimètres, de préférence, supérieure à trente millimètres. Ceci permet de positionner les connecteurs 96 positionnés au-dessus de l'épaisseur du panneau d'habillage d'un faux-plafond lorsque le luminaire 12 est monté dans la structure d'encastrement.

Par exemple, comme cela est illustré par **la** **figure 10****,** l'élément d'interconnexion électronique 90 est formé par une plaquette de circuit imprimé flexible de type « semiflex ».

De façon connue en soi, un « semiflex » est formé à partir d'une plaquette de circuit imprimé rigide par exemple de type FR4 (composée de résine epoxy renforcé de fibres de verre) à laquelle a été retirée une épaisseur de matière afin de lui conférer des propriétés flexibles. Ce type de circuit semiflex permet une flexion à 90° d'une plaquette de circuit imprimé rigide. Une fois en position, la portion de circuit semiflex est immobile. Ainsi, dans l'exemple décrit, la carte de traitement 104 et la carte de photoréception 102 sont issues d'une même plaquette de circuit imprimé initiale et sont reliées entre elles par une portion semiflex formée par réduction de matière de la plaquette initiale dans cette portion **(****figure 10****)** afin de séparer deux portions rigides 102 et 104.

Toutefois, l'élément structurel d'interconnexion électronique 90 peut en variante être formé par un câble nappe ou encore un circuit imprimé flex. L'inconvénient de ces deux autres techniques de connexion est qu'elles nécessitent toutes deux des bornes de connexion qui produisent un bruit électronique pouvant nuire au bon fonctionnement des circuits électroniques constituant les modules de traitement et de photoréception.

Dans l'exemple décrit, la paroi interne du boîtier 24 est munie de plots en saillie axiale 92 pour recevoir des vis de fixation de la carte de traitement 104 au boîtier 24. Ces plots 92 sont obtenus de préférence lors du moulage de la coque 70 **(****figure 7****).**

Dans ce mode de réalisation, le module d'éclairage 50 comprend un élément optique 58 de mise en forme du faisceau lumineux émis par la source d'éclairage et couplé à la source d'éclairage. La carte de traitement 104 s'étend de préférence autour de cet élément optique 58.

Comme cela est illustré sur **la** **figure 10****,** la carte de traitement 104 comprend au moins un élément connecteur 96 pour le raccordement physique au réseau de télécommunication. Par exemple, l'élément connecteur 96 comprend une prise RJ45. Dans l'exemple illustré, la carte de traitement 104 porte trois éléments connecteurs 96 : une prise RJ45, un élément connecteur à un réseau d'alimentation électrique muni d'une embase femelle, une prise de raccordement à un réseau de gestion de l'éclairage, par exemple du type Dali.

Dans l'exemple décrit, l'élément connecteur 96 au réseau de télécommunication et/ou au réseau d'alimentation électrique peut comporter un récepteur mâle ou un récepteur femelle agencé pour pouvoir collaborer avec une extrémité mâle ou femelle d'au moins un câble électrique (et/ou) un câble réseau correspondant afin d'établir une connexion électrique (et/ou réseau) entre le câble et le luminaire 12. En outre, de façon alternative ou complémentaire, l'élément connecteur 96 peut comprendre au moins un récepteur optique mâle ou femelle agencé pour pouvoir collaborer avec une extrémité mâle ou femelle d'une fibre optique correspondante afin d'établir un couplage optique entre ladite fibre optique correspondante et le luminaire afin de permettre de transférer des données numériques.

Le ou les éléments connecteurs 96 sont de préférence situés en périphérie du boîtier et orientés radialement et vers l'extérieur du boîtier afin de faciliter la connexion du ou des câbles électriques, réseau de communication ou fibre optique. En effet, cette configuration avantageuse permet, lorsque le luminaire est partiellement inséré dans l'ouverture d'encastrement par exemple du faux-plafond de faciliter la manipulation des câbles électriques présents dans le plafond ou le faux-plafond, ainsi que leur connexion au luminaire via ledit élément de connexion qui est alors favorablement orienté dans la direction des câbles électriques.

Dans l'exemple illustré, le boîtier 24 comprend une ouverture 94 d'accès au connecteur 96 au travers de sa paroi périphérique 26. Cette ouverture d'accès 94 est ménagée dans la coque 70.

De préférence, les éléments connecteurs 96 sont par exemple soudés directement sur la carte de traitement 104 par une pluralité de petites broches qui les maintiennent en place.

Toutefois, du fait des efforts de traction importants lors des multiples branchements et débranchements, le maintien des connecteurs sur la carte de traitement est fragile. En effet, par exemple, en tirant sur le cordon du câble RJ45, une des broches maintenant le connecteur RJ45 sur la carte de traitement 104, peut être désolidarisée par rupture de soudure.

Afin d'éviter une dégradation prématurée des connecteurs 96, le luminaire 12 comprend encore de préférence une plaquette 98 d'habillage qui est adaptée pour masquer l'ouverture d'accès 94 tout en délimitant un enjoliveur 99 épousant le contour périphérique de chaque connecteur 96.

Cette plaquette d'habillage 98 a également une fonction d'immobilisation du ou des connecteurs 96 par rapport au luminaire 12 pour éviter que les efforts répétés n'entraînent une rupture de la fixation du connecteur 96 à la carte de traitement 104. Par exemple, le connecteur 96 est muni sur son pourtour de languettes élastiquement déformables configurées pour venir en appui contre la plaquette d'habillage 98 par retour élastique des languettes lorsque le connecteur 96 est inséré dans la plaquette 98. Chaque enjoliveur 99 délimite par exemple le contour du connecteur 96 correspondant.

Dans l'exemple décrit, la plaquette 98 est fixée à la coque 70 par bouterollage d'au moins un pion 97 en matière plastique venu de matière avec la coque 70. A cet effet, la plaquette 98 comprend un rebord de fixation comprenant un trou de passage du pion de bouterollage 97. Selon la technique du bouterollage, la plaquette 98 est assemblée à la coque 70 par déformation plastique du pion 97 lors d'une opération de chauffage du pion afin de créer une liaison mécanique entre les deux éléments.

On va maintenant décrire les principaux aspects de fabrication d'un luminaire selon l'invention illustré par **les** **figures 1 à 11**.

Conformément à **la** **figure 5**, le montage du luminaire est relativement aisé. Les différentes étapes d'assemblage consistent généralement en des étapes de vissage des différents éléments constituant le luminaire 12.

Initialement, la plaquette d'habillage 98 est positionnée de manière à ce que le pion 97 de bouterollage soit inséré dans le trou prévu à cet effet de la plaquette 98. Par apport de chaleur, ce pion 97 est déformé plastique pour immobiliser la plaquette 98 par rapport à la coque 70.

Puis, au cours d'une deuxième étape, la carte de traitement 104 est vissée à la coque 70 grâce aux plots de fixation 92. Les connecteurs 96 sont positionnés au niveau de l'ouverture d'accès 94 de la coque 70 et sont insérés élastiquement à l'intérieur de la plaquette d'habillage 98. De cette façon, le luminaire est fonctionnellement personnalisable. En effet, pour fournir un luminaire présentant d'autres connecteurs 96 ou un nombre moindre de connecteurs 96, il suffit de modifier la plaquette d'habillage 98 et la carte 104 portant les connecteurs 96 sans nécessiter une modification de la coque 70.

Au cours d'une troisième étape, l'élément optique 58 est inséré à l'intérieur de la coque 70. Au cours d'une quatrième étape, le dissipateur thermique 64 et le module d'éclairage 50 sont fixés sur la coque 70.

Par ailleurs, les moyens de retenue à ressort 34 sont assemblés par vissage sur un rebord périphérique de la coque 70 et du socle 28.

Une fois assemblé, le luminaire 12 forme un objet compact, robuste et assurant une excellente protection de ses éléments fonctionnels LiFi intégrés.

Le luminaire selon l'invention présente l'avantage d'être particulièrement esthétique tout en intégrant de façon sécurisée les modules fonctionnels de la technologie LiFi.

Bien entendu, d'autres modes de réalisation sont envisageables sans sortir du cadre de l'invention. Ainsi, diverses modifications peuvent être apportées par l'homme du métier à l'invention qui vient d'être décrite à titre d'exemple.

## Revendications

1. [Luminaire (12) connectable à au moins un réseau de télécommunication (14), tel que le réseau Internet pour la communication de données par la lumière avec un terminal distant (16; 16A, 16B, 16C), du type comprenant :
- un boîtier (24) délimitant une paroi périphérique (26) autour d'un axe de référence (X) et étant muni d'un socle (28) délimitant une fenêtre (30) d'émission de lumière,
- un photorécepteur (76) agencé dans le boîtier (24) et configuré pour recevoir un faisceau lumineux du terminal distant (16; 16A, 16B, 16C) transportant un signal de données dit montant,
- un module d'éclairage (50) agencé dans le boîtier (24) et configuré pour émettre un faisceau lumineux au travers de la fenêtre (30), transportant un signal de données dit descendant,
- un module de traitement (80) des signaux de données selon au moins un protocole de communication du réseau,
le luminaire (12) comprend une carte de circuit imprimé (104), dite carte de traitement (104), s'étendant transversalement à l'intérieur du boîtier (24) et à distance du socle (28), sur laquelle est monté le module de traitement (80), caractérisé = en ce que la carte de traitement (104)
comprend au moins un élément connecteur (96) au réseau de télécommunication (14) et le boîtier (24) comprend une ouverture (94) d'accès au connecteur (96) au travers de sa paroi périphérique (26).

2. Luminaire (12) selon la revendication précédente, dans lequel la carte de traitement (104) occupe sensiblement toute la surface d'une section transversale du luminaire (12).

3. Luminaire (12) selon l'une ou l'autre des revendications précédentes, dans lequel la carte de traitement (104) comprend une ouverture de transmission de la lumière émise par le module d'éclairage (50) au travers du luminaire (12).

4. Luminaire (12) selon l'une quelconque des revendications précédentes, dans lequel le photorécepteur (76) est relié électriquement à la carte de traitement (104) par un élément (90) d'interconnexion électronique d'extension sensiblement axiale à l'intérieur du boîtier (24).

5. Luminaire (12) selon la revendication précédente, dans lequel le photorécepteur (76) est porté par une carte de circuit imprimé 102, dite carte de photoréception, et l'élément d'interconnexion électronique (90) est formé par une plaquette flexible de circuit imprimé semiflex reliant les cartes de photoréception 102 et de traitement 104.

6. Luminaire (12) selon l'une quelconque des revendications précédentes, dans lequel, prise axialement, la distance entre le socle (28) et la carte de traitement (104) est supérieure à dix millimètres.

7. Luminaire (12) selon l'une quelconque des revendications précédentes, dans lequel la carte de traitement (100) a une forme générale de couronne ouverte ou fermée.

8. Luminaire (12) selon l'une quelconque des revendications précédentes, dans lequel la paroi interne du boîtier (24) est munie de plots (90) en saillie axiale pour recevoir des vis de fixation de la carte de traitement (104) au boîtier (24).

9. Luminaire (12) selon l'une quelconque des revendications précédentes, dans lequel, le module d'éclairage (50) comprenant une source d'éclairage (52) et un élément optique (58) de mise en forme du faisceau lumineux émis par la source d'éclairage (52) et couplé à la source d'éclairage (52), la carte de traitement (104) s'étend autour de l'élément optique (58).

10. Luminaire (12) selon la revendication précédente, dans lequel l'élément optique (58) présente une extrémité proximale (60) couplée à la source d'éclairage (52) et une extrémité distale (62) débouchant sur la fenêtre d'émission de lumière (30).

11. Luminaire selon la revendication 9 ou 10, dans lequel l'élément optique (58) est choisi parmi un réflecteur comprenant une surface interne réfléchissante et une lentille.

12. Luminaire (12) selon l'une quelconque des revendications précédentes, dans lequel le boîtier (24) comprend un capot (70) monté sur le socle (28) pour loger la carte de traitement (104) et le module d'éclairage (50), tel qu'un capot (70) en forme générale de cloche tronquée.

13. Luminaire (12) selon l'une quelconque des revendications précédentes, dans lequel le socle (28) est réalisé dans un matériau comprenant essentiellement une matière plastique ou une matière métallique.

14. Luminaire (12) selon la revendication précédente, comportant une plaquette d'habillage (98) qui est configurée pour masquer l'ouverture d'accès (94) tout en délimitant un enjoliveur (99) épousant le contour périphérique du connecteur (96).

15. Luminaire (12) selon l'une quelconque des revendications précédentes, étant destiné à être encastré dans une ouverture 'encastrement d'une structure présentant une face visible et une face cachée opposée, le socle porte des moyens de retenue (34) du luminaire (12) à la structure, adaptés pour permettre le maintien par pression du luminaire au travers de la structure.

16. Luminaire (12) selon l'une quelconque des revendications précédentes, comprenant un organe (64) de dissipation thermique de la chaleur générée au cours du fonctionnement du module d'éclairage (50), porté par le boîtier (24).

17. Luminaire (12) selon l'une quelconque des revendications précédentes, dans lequel le module de traitement (80) comprend au moins une unité (82) de réception ou au moins une unité (84) d'émission de signaux de données selon la technologie LiFi.

18. Luminaire (12) selon l'une quelconque des revendications précédentes, propre à opérer la communication de données avec un terminal distant selon un débit théorique supérieur à dix mégabits par seconde, de préférence supérieur à quarante mégabits par seconde.

## Patentansprüche

1. [Leuchte (12), die an mindestens ein Telekommunikationsnetz (14), wie beispielsweise das Internet, zur Datenübertragung mittels Licht mit einem entfernten Endgerät (16; 16A, 16B, 16C) anschließbar ist, mit:
- ein Gehäuse (24), das eine Umfangswand (26) um eine Referenzachse (X) begrenzt und mit einem Sockel (28) versehen ist, der ein Fenster (30) zur Lichtemission begrenzt,
- einen in dem Gehäuse (24) angeordneten und zum Empfangen eines Lichtstrahls von dem entfernten Endgerät (16; 16A, 16B, 16C) konfigurierten Fotorezeptor (76), der ein sogenanntes aufsteigendes Datensignal transportiert,
- ein im Gehäuse (24) angeordnetes Beleuchtungsmodul (50), das so konfiguriert ist, dass es einen Lichtstrahl durch das Fenster (30) sendet, der ein sogenanntes absteigendes Datensignal transportiert,
- ein Modul (80) zur Verarbeitung der Datensignale gemäß mindestens einem Kommunikationsprotokoll des Netzes,
die Leuchte (12) eine Leiterplatte (104), die als Verarbeitungskarte (104) bezeichnet wird, umfasst, die sich quer im Inneren des Gehäuses (24) und in einem Abstand vom Sockel (28) erstreckt, auf der das Verarbeitungsmodul (80) montiert ist, **dadurch gekennzeichnet, dass** die Verarbeitungsplatine (104) mindestens ein Verbindungselement (96) zum Telekommunikationsnetz (14) umfasst und das Gehäuse
(24) eine Öffnung (94) für den Zugang zum Verbinder (96) durch seine Umfangswand (26) aufweist.

2. Leuchte (12) nach dem vorherigen Anspruch, wobei die Verarbeitungskarte (104) im Wesentlichen die gesamte Fläche eines Querschnitts der Leuchte (12) einnimmt.

3. Leuchte (12) nach einem der vorstehenden Ansprüche, wobei die Verarbeitungskarte (104) eine Öffnung zur Übertragung des vom Beleuchtungsmodul (50) emittierten Lichts durch die Leuchte (12) hindurch aufweist.

4. Leuchte (12) nach einem der vorstehenden Ansprüche, wobei der Fotorezeptor (76) über ein im Wesentlichen axial verlaufendes elektronisches Verbindungselement (90) innerhalb des Gehäuses (24) elektrisch mit der Verarbeitungskarte (104) verbunden ist.

5. Leuchte (12) nach dem vorherigen Anspruch, wobei der Fotorezeptor (76) von einer Leiterplatte (102), einer sogenannten Fotorezeptorplatine, getragen wird und das elektronische Verbindungselement (90) durch eine flexible Halb-Flex-Leiterplatte gebildet wird, die die Fotorezeptorplatine (102) und die Verarbeitungsplatine (104) verbindet.

6. Leuchte (12) nach einem der vorstehenden Ansprüche, wobei in axialer Richtung der Abstand zwischen dem Sockel (28) und der Verarbeitungsplatine (104) größer als zehn Millimeter ist.

7. Leuchte (12) nach einem der vorstehenden Ansprüche, wobei die Verarbeitungskarte (100) eine allgemeine Form einer offenen oder geschlossenen Krone aufweist.

8. Leuchte (12) nach einem der vorstehenden Ansprüche, wobei die Innenwand des Gehäuses (24) mit axial vorstehenden Vorsprüngen (90) versehen ist, um Befestigungsschrauben der Verarbeitungskarte (104) am Gehäuse (24) aufzunehmen.

9. Leuchte (12) nach einem der vorstehenden Ansprüche, wobei das Beleuchtungsmodul (50) eine Lichtquelle
(52) und ein optisches Element (58) zum Formen des von der Beleuchtungsquelle (52) emittierten Lichtstrahls umfasst und mit der Beleuchtungsquelle (52) gekoppelt ist, wobei sich die Verarbeitungsplatine (104) um das optische Element (58) herum erstreckt.

10. Leuchte (12) nach dem vorstehenden Anspruch, wobei das optische Element (58) ein proximales Ende (60), das mit der Lichtquelle (52) gekoppelt ist, und ein distales Ende (62) aufweist, das in das Lichtaustrittsfenster (30) mündet.

11. Leuchte nach Anspruch 9 oder 10, wobei das optische Element (58) aus einem Reflektor mit einer reflektierenden Innenfläche und einer Linse ausgewählt ist.

12. Leuchte (12) nach einem der vorstehenden Ansprüche, wobei das Gehäuse (24) eine auf dem Sockel (28) angebrachte Abdeckung (70) zur Aufnahme der Steuerplatine (104) und des Beleuchtungsmoduls (50) umfasst, beispielsweise eine im Wesentlichen glockenförmige Abdeckung (70).

13. Leuchte (12) nach einem der vorstehenden Ansprüche, wobei der Sockel (28) aus einem Material besteht, das im Wesentlichen aus Kunststoff oder Metall besteht.

14. Leuchte (12) nach dem vorherigen Anspruch, mit einer Verkleidungsplatte (98), die so ausgebildet ist, dass sie die Zugangsöffnung (94) verdeckt und gleichzeitig eine Zierblende (99) begrenzt, die sich an die Umfangskontur des Steckverbinders (96) anpasst.

15. Leuchte (12) nach einem der vorstehenden Ansprüche, die zum Einbau in eine Einbauöffnung einer Struktur mit einer sichtbaren Seite und einer gegenüberliegenden verdeckten Seite bestimmt ist, wobei der Sockel Haltevorrichtungen (34) für die Leuchte (12) an der Struktur aufweist, die so ausgelegt sind, dass sie die Leuchte durch Druck durch die Struktur hindurch halten.

16. Leuchte (12) nach einem der vorstehenden Ansprüche, mit einem Element (64) zur Ableitung der während des Betriebs des Beleuchtungsmoduls (50) erzeugten Wärme, das vom Gehäuse (24) getragen wird.

17. Leuchte (12) nach einem der vorstehenden Ansprüche, wobei das Verarbeitungsmodul (80) mindestens eine Empfangseinheit (82) oder mindestens eine Sendeeinheit (84) für Datensignale gemäß der LiFi-Technologie umfasst.

18. Leuchte (12) nach einem der vorstehenden Ansprüche, die zur Datenkommunikation mit einem entfernten Endgerät mit einer theoretischen Übertragungsrate von mehr als zehn Megabit pro Sekunde, vorzugsweise mehr als vierzig Megabit pro Sekunde, geeignet ist.

## Claims

1. [Lighting fixture (12) connectable to at least one telecommunications network (14), such as the Internet, for data communication via light with a remote terminal (16; 16A, 16B, 16C), of the type comprising:
- a housing (24) defining a peripheral wall (26) around a reference axis (X) and provided with a base (28) defining a light-emitting window (30),
- a photoreceptor (76) arranged in the housing (24) and configured to receive a light beam from the remote terminal (16; 16A, 16B, 16C) carrying an upward data signal,
- an illumination module (50) arranged in the housing (24) and configured to emit a light beam through the window (30), carrying a data signal known as a downstream signal,
- a processing module (80) for processing the data signals according to at least one network communication protocol,
the luminaire (12) comprises a printed circuit board (104), known as a processing board (104), extending transversely inside the housing (24) and at a distance from the base (28), on which the processing module (80) is mounted, **characterized in that** the processing board (104) comprises at least one connector element (96) to the telecommunications network (14) and the housing
(24) comprises an opening (94) for access to the connector (96) through its peripheral wall (26).

2. Lighting fixture (12) according to the previous claim, wherein the processing board (104) occupies substantially the entire cross-sectional area of the lighting fixture (12).

3. Lighting fixture (12) according to any of the preceding claims, wherein the processing board (104) comprises an opening for transmitting light emitted by the lighting module (50) through the lighting fixture (12).

4. Lighting fixture (12) according to any of the preceding claims, wherein the photoreceptor (76) is electrically connected to the processing board (104) by an electronic interconnection element (90) extending substantially axially inside the housing (24).

5. Lighting fixture (12) according to the preceding claim, wherein the photoreceptor (76) is carried by a printed circuit board 102, known as a photoreception board, and the electronic interconnection element (90) is formed by a flexible semi-flex printed circuit board connecting the photoreception (102) and processing boards (104).

6. Lighting fixture (12) according to any of the preceding claims, wherein, taken axially, the distance between the base (28) and the processing board (104) is greater than ten millimeters.

7. Lighting fixture (12) according to any of the preceding claims, wherein the processing board (100) has a general shape of an open or closed ring.

8. Lighting fixture (12) according to any of the preceding claims, wherein the inner wall of the housing (24) is provided with axially protruding studs (90) for receiving screws for securing the processing board (104) to the housing (24).

9. Lighting fixture (12) according to any of the preceding claims, wherein the lighting module (50) comprises a light source
(52) and an optical element (58) for shaping the light beam emitted by the lighting source (52) and coupled to the lighting source (52), the processing board (104) extends around the optical element (58).

10. Lighting fixture (12) according to the preceding claim, wherein the optical element (58) has a proximal end (60) coupled to the light source (52) and a distal end (62) opening into the light emission window (30).

11. Lighting fixture according to claim 9 or 10, wherein the optical element (58) is selected from a reflector comprising an internal reflective surface and a lens.

12. Lighting fixture (12) according to any of the preceding claims, wherein the housing (24) comprises a cover (70) mounted on the base (28) to accommodate the processing board (104) and the lighting module (50), such as a cover (70) generally shaped like a truncated bell.

13. Lighting fixture (12) according to any of the preceding claims, wherein the base (28) is made of a material comprising essentially a plastic material or a metallic material.

14. Lighting fixture (12) according to the preceding claim, comprising a cover plate (98) which is configured to conceal the access opening (94) while defining a trim (99) which follows the peripheral contour of the connector (96).

15. Lighting fixture (12) according to any of the preceding claims, intended to be recessed into a recess opening of a structure having a visible face and an opposite hidden face, the base bears means (34) for retaining the lighting fixture (12) to the structure, adapted to allow the lighting fixture to be held in place by pressure through the structure.

16. Lighting fixture (12) according to any of the preceding claims, comprising a heat dissipation member (64) for dissipating heat generated during operation of the lighting module (50), carried by the housing (24).

17. Lighting fixture (12) according to any of the preceding claims, wherein the processing module (80) comprises at least one unit (82) for receiving or at least one unit (84) for transmitting data signals using LiFi technology.

18. Lighting fixture (12) according to any of the preceding claims, capable of communicating data with a remote terminal at a theoretical data rate greater than ten megabits per second, preferably greater than forty megabits per second.
